# NEW EUROPEAN PATENT SPECIFICATION

(11) **EP 1 172 032 B2**
(45) Date of publication and mention of the opposition decision: **16.07.2008**
(45) Mention of the grant of the patent: 22.09.2004
(21) Application number: 01202235.6
(22) Date of filing: 11.06.2001
(51) Int. Cl.: A01J 5/017

(54) **A construction for automatically milking animals**
Konstruktion zum automatischen Melken von Tieren
Construction pour la traite automatique d'animaux

(30) Priority: 10.07.2000 NL 1015670
(43) Date of publication of application: 16.01.2002
(73) Proprietor: Lely Enterprises AG, 6300 ZUG (CH)
(72) Inventor: Van der Lely, Alexander, 3065 NA Rotterdam (NL); van den Berg, Karel, 2971 BR Bleskensgraaf (NL); Fransen, Renatus Ignatius Josephus, 3155 ZD Vlaardingen (NL)
(74) Representative: Clarkson, Paul Magnus

(56) References cited:
- EP-A- 0 188 303
- EP-A- 0 300 582
- EP-A- 0 332 230
- EP-A- 0 551 960
- EP-A- 0 726 027
- WO-A-95/26132
- WO-A-98/01022
- WO-A-99/25177
- FR-A- 2 595 197
- GB-A- 2 226 941
- "Vers La Robotisation De La Traite Des Vaches Laitieres" by J.B. Montailescot - CEMAGREF BTMEA No HS 86-4 3eme trimestre 1986 (pages 37-40)

## Description

The invention relates to a construction for automatically milking animals according to the preambles of claims 1 and 11.

Such a construction is known from document WO 98 01 022. With the known constructions the controllable robot arm is often pivotably suspended about an axis. This has inter alia the disadvantage that for realizing the necessary three-dimensional movements there is required a complex control for the robot arm.

The invention aims at improving such a construction. According to the invention this is achieved by the measures described in the characterizing part of claims 1 and 11. By means of the suspension from the ball joint the control of the robot arm is relatively simple and yet reliable and accurate.

The invention will now be explained in further detail with reference to the accompanying figures.
Figure 1 is a schematic side view of a construction according to the invention;
Figure 2 is a schematic view of a part of the construction according to the arrows II in Figure 1;
Figure 3 is a schematic view of a part of the construction according to the arrow III in Figure 2;
Figure 4 is a schematic view of a part of the construction in a further embodiment;
Figure 5 is a schematic view of a part of the construction in a still further embodiment;
Figure 6 is a schematic view of a part of the construction in another further embodiment;
Figure 7 is a schematic view of a part of the construction according to the arrow VII in Figure 6;
Figure 8 is a schematic cross-section of a part of the construction according to the arrow VIII in Figure 7;
Figure 9 is a schematic side view of a part of a further construction; and
Figure 10 is a schematic view of a part of the construction according to the arrow X in Figure 9.

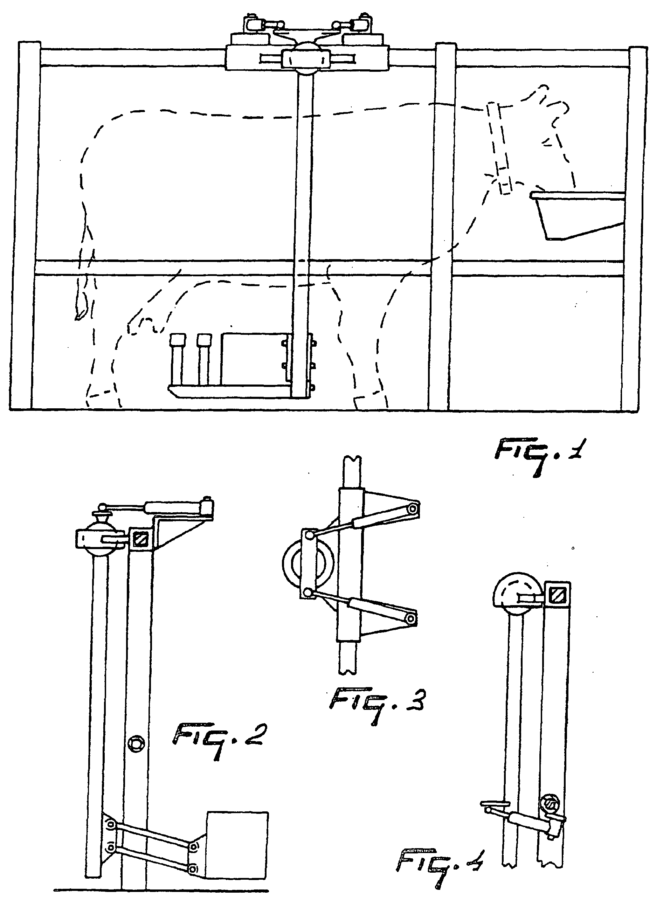

Figure 1 is a schematic side view of a construction according to the invention. The construction for automatically milking animals comprises a milk box 1 with a milking robot 2, known per se, which is provided with a controllable robot arm 3 for connecting teat cups 4 to the teats of an animal 5 to be milked (indicated by a dotted line). During automatic milking the animal 5 can eat and/or drink from a feeding trough 6. The robot arm 3 is suspended from a ball joint 7 which is controllable by means of two control elements, such as e.g. cylinders 9, via an intermediate element 8 connected therewith. The long, substantially vertical part of the robot arm 3 is movable in two directions by means of the two control cylinders 9.

As also illustrated in Figures 2 and 3, the ball joint 7 is shiftably fastened to the milk box 1 (in the embodiment shown in horizontal direction). A further part of the robot arm 3 is provided with a carrier element 10 for the teat cups 4. With the aid of further control means, said carrier element 10 is movable substantially in vertical direction relative to the straight part of the robot arm 3 that is connected with the ball joint 7. In the embodiment shown in Figures 1 to 3, the further control means comprise a parallelogram construction 11. Of course, the further control means may also be designed differently, such as e.g. a telescope construction, a cylinder construction or a hingeable construction.

In the embodiment of Figure 4 the ball joint 7 is again shiftably fastened to the milk box 1. The robot arm 3 is now connected with an intermediate element 12 which is itself connected with the two control cylinders 9. The cylinders 9 are also shiftably fastened to the milk box 1. The robot arm 3 can in principle be moved in the same manner.

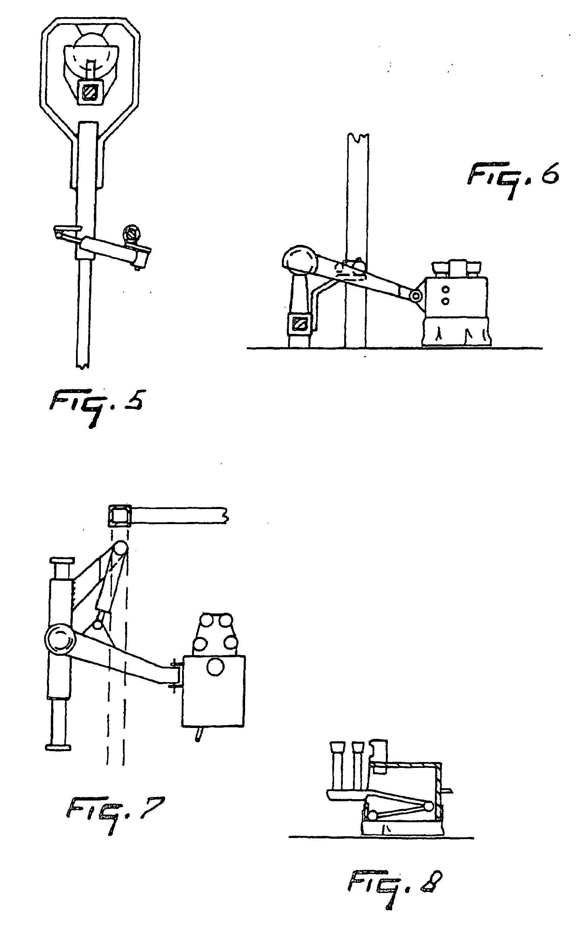

In the embodiment of Figure 5 the ball joint 7 is again shiftably fastened to the milk box 1. The robot arm 3 is now vertically movable by means of a telescope construction and again connected with an intermediate element 12 which is itself connected with the two control cylinders 9. The cylinders 9 are also shiftably fastened to the milk box 1. The robot arm 3 can in principle again be moved in the same manner.

In the embodiment of Figures 6 to 8 the ball joint 7 is fastened at a rather low level at the lateral side just outside the milk box 1. The ball joint 7 is again shiftable in the longitudinal direction of the milk box 1. The carrier element 10 with the teat cups 4 is provided with an air-cushion construction 13 and is thus suitable for being moved in a floating manner over the floor of the milk box 1. With the aid of the cylinder 9 the robot arm 3 can be pivoted to under the udder of the animal 5 to be milked and again be pivoted away therefrom. As shown in Figure 8, the carrier element 10 is further provided with a rod construction 14 with controllable hinges by means of which the teat cups 4 can be moved in vertical direction. Said robot arm construction is very compact.

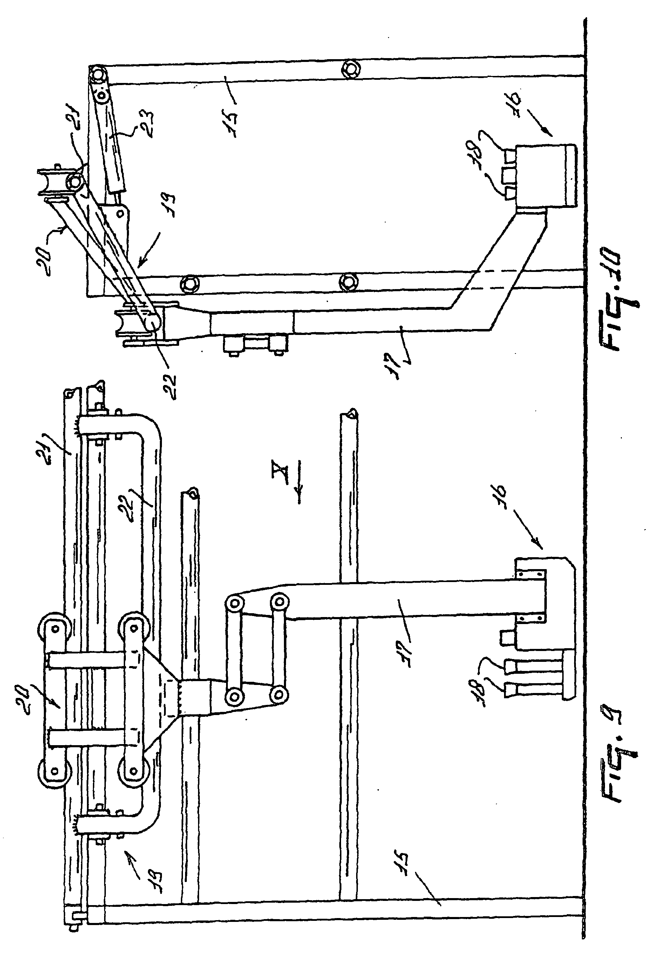

Figures 9 and 10 show schematically a part of a further construction (without ball joint) for automatically milking animals. The construction is provided with a milk box 15 with a milking robot 16 (known per se), which is provided with a controllable robot arm 17 for connecting teat cups 18 to the teats of a (non-shown) animal to be milked. The robot arm 17 is suspended from a suspension element 20 that is movable along a rail construction 19 which extends preferably in the longitudinal direction of the milk box 15. The rail construction 19 is partially pivotably connected with the milk box 15 and comprises a first round rail 21, which is fixedly connected to the milk box 15, and a second round rail 22 extending parallel to the first rail 21, said second round rail 22 being pivotable by means of a control element 23 that is connected to the milk box 15 (see Figure 10).

The construction is suitable for moving the teat cups 18 to under the animal to be milked or away therefrom by means of the pivoting movement of the rail construction 19. By means of (for example) a parallelogram construction the teat cups 18 can be moved in vertical direction. The pivotable rail construction 19 with the double suspension element 20, bearing on two rails 21, 22, is very robust.

## Claims

1. A construction for automatically milking animals, said construction comprising a milk box (1) with a milking robot (2), which is provided with a controllable robot arm (3) for connecting teat cups (4) to the teats of an animal (5) to be milked, **characterized in that** the robot arm (3) is suspended from a ball joint (7).

2. A construction as claimed in claim 1, **characterized in that** the robot arm (3) and/or the ball joint (7) connected therewith are/is controllable by means of at least one control element (9).

3. A construction as claimed in claim 1 or 2, **characterized in that** a part of the robot arm (3) and/or the ball joint (7) connected therewith are/is connected with two control cylinders (9) in such a manner that said part of the robot arm (3) is movable substantially in two directions.

4. A construction as claimed in any one of claims 1 to 3, **characterized in that** the ball joint (7) is shiftably fastened to the milk box (1).

5. A construction as claimed in claim 3 or 4, **characterized in that** a further part of the robot arm (3) is provided with a carrier element (10) for the teat cups (4), at least the carrier element (10) being movable with the aid of further control means (11) substantially in one direction relative to the part that is connected with the ball joint (7).

6. A construction as claimed in claim 5, **characterized in that** the further control means comprise a parallelogram construction (11).

7. A construction as claimed in claim 5 or 6, **characterized in that** the further control means comprise a telescope construction.

8. A construction as claimed in any one of claims 5 to 7, **characterized in that** the further control means comprise a cylinder construction.

9. A construction as claimed in any one of claims 5 to 8, **characterized in that** the further control means comprise a hingeable construction.

10. A construction as claimed in any one of claims 5 to 9, **characterized in that** the further part of the robot arm (3) with the teat cups (4) is provided with an air-cushion construction (13) and is suitable for being moved in a floating manner over the floor of the milk box (1).

11. A construction for automati milking animals, said construction comprising a milk box (15) with a milking robot (16), which is provided with a controllable robot arm (17) for connecting teat cups (18) to the teats of an animal to be milked, wherein the robot arm (17) is suspended from a suspension element (20) that is movable along a rail construction (19), **characterized in that** said rail construction (19) being at least partially pivotably connected with the milk box (15).

12. A construction as claimed in claim 11, **characterized in that** the rail construction (19) comprises a first rail (21), which is fixedly fastened to the milk box (15), and a second rail (22) extending parallel to the first rail (21), said second rail (22) being pivotable by means of a control element (23) that is connected with the milk box (15).

13. A construction as claimed in any one of claims 11 and 12, **characterized in that** the construction is suitable for moving the teat cups (18) to under the animal to be milked or away from said animal by means of the pivoting movement of the rail construction (19).

## Patentansprüche

1. Vorrichtung zum automatischen Melken von Tieren, wobei die Vorrichtung eine Melkbox (1) mit einem Melkroboter (2) umfaßt, der mit einem steuerbaren Roboterarm (3) zum Anschließen von Zitzenbechern (4) an die Zitzen eines zu melkenden Tieres (5) versehen ist,
**dadurch gekennzeichnet, daß** der Roboterarm (3) an einem Kugelgelenk (7) aufgehängt ist.

2. Vorrichtung nach Anspruch 1,
**dadurch gekennzeichnet, daß** der Roboterarm (3) und/oder das mit ihm verbundene Kugelgelenk (7) mittels mindestens eines Steuerelements (9) steuerbar sind/ist.

3. Vorrichtung nach Anspruch 1 oder 2,
**dadurch gekennzeichnet, daß** ein Teil des Roboterarmes (3) und/oder des mit ihm verbundenen Kugelgelenks (7) mit zwei Steuerzylindern (9) derart verbunden sind/ist, daß der Teil des Roboterarmes (3) im wesentlichen in zwei Richtungen bewegbar ist.

4. Vorrichtung nach einem der Ansprüche 1 bis 3,
**dadurch gekennzeichnet, daß** das Kugelgelenk (7) verschiebbar an der Melkbox (1) angebracht ist.

5. Vorrichtung nach Anspruch 3 oder 4,
**dadurch gekennzeichnet, daß** ein weiterer Teil des Roboterarmes (3) mit einem Tragelement (10) für die Zitzenbecher (4) versehen ist, wobei zumindest das Tragelement (10) mit Hilfe einer weiteren Steuervorrichtung (11) im wesentlichen in eine Richtung relativ zu dem Teil bewegbar ist, der mit dem Kugelgelenk (7) verbunden ist.

6. Vorrichtung nach Anspruch 5,
**dadurch gekennzeichnet, daß** die weitere Steuervorrichtung eine Parallelogrammführung (11) umfaßt.

7. Vorrichtung nach Anspruch 5 oder 6,
**dadurch gekennzeichnet, daß** die weitere Steuervorrichtung eine teleskopische Vorrichtung umfaßt.

8. Vorrichtung nach einem der Ansprüche 5 bis 7,
**dadurch gekennzeichnet, daß** die weitere Steuervorrichtung eine Zylindervorrichtung umfaßt.

9. Vorrichtung nach einem der Ansprüche 5 bis 8,
**dadurch gekennzeichnet, daß** die weitere Steuervorrichtung eine Gelenkvorrichtung umfaßt.

10. Vorrichtung nach einem der Ansprüche 5 bis 9,
**dadurch gekennzeichnet, daß** der weitere Teil des Roboterarmes (3) mit den Zitzenbechern (4) mit einer Luftkissen-Konstruktion (13) versehen und geeignet ist, schwebend über den Boden der Melkbox (1) bewegt zu werden.

11. Vorrichtung zum automatischen Melken von Tieren, wobei die Vorrichtung eine Melkbox (15) mit einem Melkroboter (16) umfaßt, der mit einem steuerbaren Roboterarm (17) zum Anschließen von Zitzenbechern (18) an die Zitzen eines zu melkenden Tieres versehen ist, wobei der Roboterarm (17) an einem Aufhängeelement (20) aufgehängt ist, das entlang einer Schienenkonstruktion (19) bewegbar ist,
**dadurch gekennzeichnet, daß** die Schienenkonstruktion (19) zumindest teilweise schwenkbar mit der Melkbox (15) verbunden ist.

12. Vorrichtung nach Anspruch 11,
**dadurch gekennzeichnet, daß** die Schienenkonstruktion (19) eine erste Schiene (21) umfaßt, die an der Melkbox (15) fest angebracht ist, und eine zweite Schiene (22), die sich parallel zu der ersten Schiene (21) erstreckt, wobei die zweite Schiene (22) mit Hilfe eines Steuerelements (23) schwenkbar ist, das mit der Melkbox (15) verbunden ist.

13. Vorrichtung nach einem der Ansprüche 11 und 12,
**dadurch gekennzeichnet, daß** die Vorrichtung geeignet ist, die Zitzenbecher (18) mittels der Schwenkbewegung der Schienenkonstruktion (19) unter das zu melkende Tier oder von dem Tier weg zu bewegen.

## Revendications

1. Construction pour la traite automatique d'animaux, ladite construction comprenant un box de traite (1) avec une trayeuse (2) dotée d'un bras de robot contrôlable (3) pour relier des gobelets de trayon(4) aux trayons d'un animal (5) à traire, **caractérisée en ce que** le bras de robot (3) est suspendu depuis un joint à rotule (7).

2. Construction selon la revendication 1, **caractérisée en ce que** le bras de robot (3) et/ou le joint à rotule (7) relié à ce bras peut/peuvent être contrôlé(s) au moyen d'au moins un élément de commande (9).

3. Construction selon la revendication 1 ou 2, **caractérisée en ce qu'**une partie du bras de robot (3) et/ou le joint à rotule (7) relié à ce bras est/sont raccordé(s) à deux cylindres de commande (9) de manière à ce que ladite partie du bras de robot (3) puisse se déplacer sensiblement dans deux directions.

4. Construction selon l'une quelconque des revendications 1 à 3, **caractérisée en ce que** le joint à rotule (7) est fixé de manière mobile sur le box de traite (1).

5. Construction selon la revendication 3 ou 4, **caractérisée en ce qu'**une autre partie du bras de robot (3) est dotée d'un élément porteur (10) pour les gobelets de trayon (4), au moins l'élément porteur (10) pouvant se déplacer à l'aide d'autres moyens de commande (11) sensiblement dans une direction par rapport à la partie reliée au joint à rotule (7).

6. Construction selon la revendication 5, **caractérisée en ce que** les autres moyens de commande comprennent une construction en parallélogramme (11).

7. Construction selon la revendication 5 ou 6, **caractérisée en ce que** les autres moyens de commande comprennent une construction télescopique.

8. Construction selon l'une quelconque des revendications 5 à 7, **caractérisée en ce que** les autres moyens de commande comprennent une construction cylindrique.

9. Construction selon l'une quelconque des revendications 5 à 8, **caractérisée en ce que** les autres moyens de commande comprennent une construction à charnières.

10. Construction selon l'une quelconque des revendications 5 à 9, **caractérisée en ce que** l'autre partie du bras de robot (3) avec les gobelets trayeurs (4) est dotée d'une construction à tampon pneumatique (13) et est adaptée à un déplacement libre au-dessus du sol du box de traite (1).

11. Construction pour la traite automatique d'animaux, ladite construction comprenant un box de traite (15) avec une trayeuse (16) dotée d'un bras de robot contrôlable (17) pour relier des gobelets de trayon (18) aux trayons d'un animal à traire, dans laquelle le bras de robot (17) est suspendu depuis un élément en suspension (20) qui peut être déplacé le long d'une construction à rails (19), **caractérisée en ce que** ladite construction à rails (19) est raccordée au box de traite (15) au moins partiellement de manière rotative.

12. Construction selon la revendication 11, **caractérisée en ce que** la construction à rails (19) comprend un premier rail (21) relié de manière fixe au box de traite (15) et un deuxième rail (22) s'étendant parallèlement au premier rail (21), ledit second rail (22) pouvant pivoter à l'aide d'un élément de commande (23) relié au box de traite (15).

13. Construction selon l'une quelconque des revendications 11 et 12, **caractérisée en ce que** la construction est adaptée au déplacement des godets de trayon (18) jusque sous l'animal à traire et loin dudit animal à l'aide d'un mouvement de pivot de la construction à rails (19).
